# EUROPÄISCHE PATENTANMELDUNG

(11) **EP 3 892 429 A1**
(43) Veröffentlichungstag der Anmeldung: **13.10.2021**
(21) Anmeldenummer: 21167296.9
(22) Anmeldetag: 07.04.2021
(51) Int. Cl.: B28B 11/24, B28B 15/00, F27D 1/00

(54) **HÄRTEANLAGE ZUM HÄRTEN EINES BETONTÜBBINGS EINES TUNNELAUSBAUSYSTEMS**

(30) Priorität: 07.04.2020 WO PCT/EP2020/059943
(71) Anmelder: HERRENKNECHT AKTIENGESELLSCHAFT, 77963 Schwanau (DE)
(72) Erfinder: MEDEL, Stefan, 77723 Gengenbach (DE)
(74) Vertreter: Klickow & Wetzel PartGmbB

(57) **Zusammenfassung**

Die Erfindung betrifft eine Härteanlage zum Härten eines in eine Schalung (10) zum Herstellen eines Betontübbings (500) eines Tunnelausbausystems eingefüllten Betons mit wenigstens einer Härtekammer (310), in der wenigstens eine Schalung (10) anordbar ist, mit wenigstens einer Anlage zur Bereitstellung wenigstens eines definierten Umgebungsparameters, insbesondere Temperatur und/oder Luftfeuchtigkeit, wobei die Härtekammer (310) wenigstens eine verschließbare Öffnung aufweist, durch die die wenigstens eine Schalung (10) in den Raum einbringbar und/oder entnehmbar ist. Dabei ist vorgesehen, dass die wenigstens eine Härtekammer (310) aus wenigstens einem containerartigen Modul aufgebaut ist.

## Beschreibung

Die Erfindung betrifft eine Härteanlage zum Härten eines in eine Schalung zum Herstellen eines Betontübbings eines Tunnelausbausystems eingefüllten Betons mit wenigstens einer Härtekammer, in der wenigstens eine Schalung anordbar ist, mit wenigstens einer Anlage zur Bereitstellung wenigstens eines definierten Umgebungsparameters, insbesondere Temperatur und/oder Luftfeuchtigkeit, wobei die Härtekammer wenigstens eine verschließbare Öffnung aufweist, durch die die wenigstens eine Schalung in den Raum einbringbar und/oder entnehmbar ist.

Solche Härteanlagen kommen beispielsweise bei Produktionsanlagen zur von Erstellung Betontübbings eines Tunnelausbausystems zu Einsatz, die dabei entweder als Umlaufanlage, die wenigstens eine Produktionslinie mit wenigstens zwei Arbeitsstationen und mit wenigstens einem Transportweg zwischen den wenigstens zwei Arbeitsstationen zum Ausführen jeweils wenigstens eines Arbeitsschrittes zur Herstellung des Betontübbings ausgeführt sind, oder als Standanlage mit wenigstens zwei stationär angeordneten Schalungen ausgeführt sind, wobei an den Schalungen die notwendigen Arbeitsschritte zur Herstellung des Betontübbings jeweils ausgeführt werden.

Die Härteanlagen sind dabei als Durchlaufanlagen erstellt, die als Hallen bereitgestellt werden und nach Beendigung der Tunnelbaustelle abgerissen werden. Weiterhin ist es häufig schwierig, den Härtungsprozess in den bekannten Härteanlagen optimal anzupassen.

Aufgabe der Erfindung ist daher, zumindest Teilaspekte der zuvor genannten Probleme zu reduzieren.

Gelöst wird die Aufgabe dadurch, dass die wenigstens eine Härtekammer aus wenigstens einem containerartigen Modul aufgebaut ist.

Ein großer Vorteil der so aufgebauten modularen Härtekammern ist, dass diese als Standardelement vorgefertigt werden können, sodass diese vorproduziert zu einer zu errichtenden Produktionsanlage für Tübbinge angeliefert werden können, sodass die Herstellungszeit der Härteanlage sich deutlich reduziert. Weiterhin sind die modularen Härtekammern wiederverwertbar, da sie nach Beendigung der Tübbingproduktion als Module entnommen, in Stand gesetzt und einer neuen Produktionsanlage zugeführt werden können.

Eine weitere Lehre sieht vor, dass die wenigstens eine Härtekammer aus mehrere hintereinander, nebeneinander und/oder übereinander angeordneten Modulen aufgebaut ist. Hierdurch lassen sich je nach zur Verfügung stehendem Platz am Tübbingproduktionsort die optimale Anordnung der Härteanlage einfach bereitstellen. Vorteilhafterweise sind die Module über Verbindungsmittel miteinander verbunden.

Bevorzugt weist das containerartige Module einen Rahmen auf, an dem Seitenteile, ein Boden und eine Decke befestigt werden können. Diese können bevorzugt in Abhängigkeit der erforderlichen Parameter der Härtung vorgesehen werden. Beispielsweise kann es vorteilhaft sein, mehrere Härtekammern zu eine größeren Härtekammer zusammenzufassen, in den dann die gleichen Umgebungsparameter wie Temperatur und Feuchtigkeit eingestellt werden können. Allerdings kann es auch gerade vorteilhaft sein, jeweils individuelle Härtekammern vorzusehen. Bevorzugt werden die Härtekammern aus Standardcontainern oder Standardcontainern nachempfundene Rahmen gebildet.

Eine weitere Lehre sieht vor, dass die wenigstens eine Härtekammer mit einer Anlage zur Regelung wenigstens eines Umgebungsparameters wie Temperatur und/oder Feuchtigkeit (Heizung/ Kühlung/ Klimaregelung/ Verdampfer/ Trockner) versehen ist. Hierdurch kann der Beton des einzelnen Tübbings optimal gehärtet werden. Hierbei ist es möglich, die Parameter dafür optimal einzustellen. Sind einzelne Härtekammern vorgesehen, kann der Beton des darin in einer Schalung befindlichen Tübbings entsprechend nach einem auf diesen individuellen Tübbing abgestimmten Umgebungsparameterverlauf insbesondere hinsichtlich Temperatur und Feuchtigkeit gehärtet werden.

Eine weitere Lehre sieht vor, dass die wenigstens eine Härtekammer wenigstens einen Messsensor zur Überwachung des wenigstens einen Umgebungsparameters aufweist. Hierdurch kann dieser Parameter optimal beibehalten bzw. angepasst werden.

Eine weitere Lehre sieht vor, dass wenigstens zwei Härtekammern vorgesehen sind, die hintereinander, nebeneinander und/oder übereinander vorgesehen sind. Hierdurch können einzelne Tübbinge nach auf diesen zugeschnittenen Parameter gehärtet werden. Hierfür ist es insbesondere vorteilhaft, wenn die Härtekammern mit individuellen Klimaregelungen vorgesehen werden.

Eine weitere Lehre sieht vor, dass eine Steuerung zum Einstellen der Umgebungsparameter vorgesehen ist. Hierdurch kann basierend auf Messwerten und ggf. basierend auf Computerprogrammen/Modellen der wenigstens eine Umgebungsparameter während des Härteprozesses entsprechend angepasst werden. Dabei ist vorteilhaft, dass der wenigstens einen Umgebungsparameter in wenigstens einer Härtekammern durch die Steuerung in Abhängigkeit der Größe des Betonelements, des Typs des Betonelements und/oder der Betonzusammensetzung einstellt.

Gemäß einer Lehre der Erfindung sind die Härtekammern entweder jeweils einzeln oder in Clustern zusammengefasst und besonders bevorzugt mit einer Klimaregelung (zur Regelung der Temperatur und Feuchtigkeit, nicht dargestellt) versehen. Je nachdem, wie viele Container zu einem temperierten Cluster zusammengefasst werden, werden dann entsprechend die Seitenwände, Decken oder Böden der Härtekammern weggelassen, um eine entsprechende Zirkulation von Wärme und Feuchtigkeit zu gewährleisten.

Vorgenannte Produktionsanlagen weisen dabei bevorzugt wenigstens einen Roboter zum Ausführen des wenigstens einen Arbeitsschritt an einer der wenigstens zwei Arbeitsstationen oder wenigstens zwei Schalungen auf, wobei wenigstens ein Fahrweg vorgesehen ist, der sich wenigstens teilweise entlang oder quer zu der wenigstens einen Produktionslinie oder entlang oder quer zu der Schalung erstreckt, wobei weiterhin wenigstens ein Fahrelement vorgesehen ist, an dem der wenigstens eine Roboter mit einer Basis angeordnet ist, und mit dem der wenigstens eine Roboter entlang oder quer zu der wenigstens einen Produktionslinie oder Schalung wenigstens teilweise verfahrbar ist. Hierdurch wird es auf einfache Weise möglich, eine Automatisierung der Produktionsanlage durchzuführen. Dabei kann gleichzeitig die notwendige Präzision beibehalten werden. Dabei ist die Basis des wenigstens einen Roboters bevorzugt an dem wenigstens einen Fahrelement entlang des Fahrelements in die Arbeitsstation hinein bewegbar.

Weiterhin ist vorteilhaft, dass der Fahrweg oberhalb der Arbeitsstation, bevorzugt auf Pfeilern, oder der Schalungen angeordnet ist. Durch das Anordnen des Fahrwegs oberhalb der Arbeitsstationen oder der Schalungen wird es möglich, mit dem Roboter von oben in den Bereich der Arbeitsstationen einzugreifen und hier mit Bezug auf die eingesetzte Schalung auf einfache Weise die notwendigen Arbeitsstellen zu erreichen.

Weiterhin ist vorteilhaft, dass der Fahrweg jeweils wenigstens eine Fahrspur beidseitig entlang oder quer zu der wenigstens einen Produktionslinie oder Schalung aufweist. Dabei ist vorteilhaft, dass es sich bei dem Fahrelement um wenigstens eine Traverse handelt, die mit ihren Enden jeweils auf einer Fahrspur verfahrbar ist, und/oder an der die Basis des wenigstens einen Roboters über die Arbeitsstation verfahrbar angeordnet ist. Durch das Aufteilen des Fahrwegs in Fahrspuren ist es möglich, entweder ein verfahrbares Portal einzusetzen, oder, wenn der Fahrweg oberhalb der Arbeitsstationen angeordnet ist, hier ein präzises Verfahren zu ermöglichen. Wird hierbei eine Traverse verwendet, kann der Roboter wiederum auf einfache Weise im Raum der Arbeitsstationen angeordnet werden. Wird dabei an der Traverse eine Basis vorgesehen, die ebenfalls verfahrbar ist, erhöht sich der Freiheitsgrad der Anordnung des im Raum der Arbeitsstationen auf einfache Weise.

Weiterhin ist vorteilhaft, dass der Roboter ein Werkzeug aufweist und so ausgeführt ist, dass das Werkzeug im Raum der Arbeitsstation bewegbar und verschwenkbar ist. Dabei ist vorteilhaft, dass das Werkzeug wechselbar in Bezug auf den Roboter ausgeführt ist. Weiterhin ist vorteilhaft, dass das wechselbare Werkzeug in einem mit dem Roboter verfahrbaren oder an der Arbeitsstation befindlichen Aufbewahrungsraum enthalten ist. Wird der Roboter mit Armen und Gelenken sowie Drehgelenken und Antrieben versehen, ist es des Weiteren möglich, den Freiheitsgrad der Anordnung eines Werkzeugs, das sich beispielsweise am Roboter angeordnet befindet, im Raum der Arbeitsstation auf einfache Weise zu erhöhen. Ist das Werkzeug dabei noch wechselbar ausgeführt, können mehrere Arbeitsschritte an einer Arbeitsstation von demselben Roboter ausgeführt werden. Je nach Art der auszuführenden Tätigkeiten und insbesondere auch nach Größe der Werkzeuge ist es dabei vorteilhaft die Werkzeuge entweder direkt fahrbar im Bereich des Roboters oder an der jeweiligen Arbeitsstation anzuordnen. Auch hierdurch ist es auf einfache Weise möglich, unterschiedliche Arbeitsschritte mit denselben Werkzeugen durchzuführen. Beispielsweise kann ein Drehmomentschrauber verwendet werden, um Befestigungen zu lösen oder herzustellen und gleichzeitig auch andere Arbeitsschritte, die einen Drehantrieb erfordern, durchzuführen.

Vorteilhafterweise handelt es sich bei dem Werkzeug um einen Drehmomentschrauber, eine Bürste, eine Walze, ein Vermessungselement, eine Düse, einen Scanner, einen Greifer, oder eine Kamera.

Weiterhin ist vorteilhaft, dass die wenigstens eine Arbeitsstation eine Station zum Öffnen oder Schließen der Schalung oder eines Deckels der Schalung, eine Station zum Entnehmen des Betontübbings, eine Station zum Reinigen der Schalung, eine Station zum Vorbereiten der Schalung zum nachfolgenden Einbringen von Beton, eine Station zum Bestücken der Schalung mit wenigstens einem Element des Betontübbings, eine Station zum Vermessen der Schalung, eine Station zum Befüllen der Schalung mit Beton und/oder eine Station zum Behandeln der Oberfläche des eingebrachten Betons des Betontübbings ist. Dabei ist vorteilhaft, dass es sich bei dem wenigstens einen Element um eine Dichtung, einen Schutzliner, ein Bewehrungselement, einen Sensor, insbesondere einen Temperatursensor, ein Entwässerungselement, ein Kunststoffelement und/oder ein Erektordübel handelt. Weiterhin ist vorteilhaft, dass wenigstens zwei parallel angeordnete Produktionslinien mit wenigstens zwei parallelen Arbeitsstationen vorgesehen sind. Weiterhin ist vorteilhaft, dass der Roboter zwischen wenigstens zwei parallelen Arbeitsstationen der wenigstens zwei parallelen Produktionslinien verfahrbar ist.

Eine weitere Lehre der Erfindung sieht vor, dass die Produktionsanlage modular aufgebaut ist.

Ein Verfahren zur Herstellung eines Betontübbings eines Tunnelausbausystems mit wenigstens einer Schalung und einer zuvor beschriebenen erfindungsgemäßen Härteanlage seiht dabei die Schritte vor:
1. Anordnen einer Schalung in einer jeweiligen Arbeitsstation entlang einer Produktionslinie der Produktionsanlage, bevorzugt positionsgenau,
2. falls erforderlich, Erkennen des Schalungstyps in der Arbeitsstation,
3. falls erforderlich, Aufnehmen des zur Durchführung eines Arbeitsschrittes notwendigen Werkzeugs durch einen Roboter,
4. Verfahren einer Basis des Roboters entlang eines Fahrwegs und/oder einer Traverse zum X, Y-Ausrichten an eine notwendige Position zur Durchführung des Arbeitsschrittes an der Arbeitsstation,
5. Ausführen und Abschließen des Arbeitsschritts durch den Roboter mit dem dafür notwendigen Werkzeug,
6. falls erforderlich Überprüfen des Abschlusses des Arbeitsschrittes, bevorzugt durch den Roboter, mit einem dafür ausgelegten Werkzeug,
7. falls erforderlich, Wiederholen der Schritte 3 bis 6 zur Durchführung eines weiteren Arbeitsschrittes an der Arbeitsstation,
8. Transport der Schalung zur nächsten Arbeitsstation,
9. falls erforderlich Wiederholen der Schritte 3 bis 8 zur Durchführung eines Arbeitsschrittes an der nächsten Arbeitsstation.

Im Anschluss daran wird dann die Härtung in der Härtungsanlage durchgeführt. Dafür wird die Schalung in eine Härtekammer eingebracht. Weiterhin wird in der Härtekammer wenigstens ein Umgebungsparameter eingestellt und ggf. gesteuert, so dass eine optimale Härtung erfolgen kann. Bevorzugt werden die Temperatur und die notwendige Feuchtigkeit dabei gesteuert eingestellt. dafür wird bevorzugt wenigstens ein Messensor vorgesehen. Nach der optimalen Verweilzeit wird die Schalung aus der Härtekammer entnommen und der gehärtete Tübbing aus der Schalung entnommen und einem Platz zum finalen Aushärten zugeführt.

Durch den Einsatz des Verfahrens wird es auf einfache Weise möglich, die Qualität der Tübbingproduktion zu erhöhen. Gleichzeitig kann auf einfache Weise präzise der Materialeinsatz bei der Tübbingproduktion erfasst und ausgewertet werden. Zusätzlich ist es möglich, die Herstellungsprozesse jedes einzelnen Tübbings auf einfache Weise zu dokumentieren. Hierdurch wird es möglich, dass es im Zusammenhang mit jedem einzelnen hergestellten Tübbing auch noch später im montierten Tunnel ein Nachvollziehen dessen Herstellung und damit auch gleichzeitig das Nachweisen des Herstellungsprozesses möglich ist.

Dabei ist vorteilhaft, dass es sich bei dem Werkzeug um einen Drehmomentschrauber, eine Bürste, eine Walze, ein Vermessungselement, eine Düse, einen Scanner, einen Greifer, oder eine Kamera, handelt.

Weiterhin ist vorteilhaft, dass die wenigstens eine Arbeitsstation eine Station zum Öffnen oder Schließen der Schalung oder eines Deckels der Schalung, eine Station zum Entnehmen des Betontübbings, eine Station zum Reinigen der Schalung, eine Station zum Vorbereiten der Schalung zum nachfolgenden Einbringen von Beton, eine Station zum Bestücken der Schalung mit Elementen des Betontübbings, eine Station zum Vermessen der Schalung, eine Station zum Befüllen der Schalung mit Beton und/oder eine Station zum Behandeln der Oberfläche des eingebrachten Betons des Betontübbings ist.

Weiterhin ist vorteilhaft, dass das wechselbare Werkzeug aus einem mit dem Roboter verfahrbaren oder an der Arbeitsstation befindlichen Aufbewahrungsraum entnommen oder abgelegt wird.

Weiterhin ist vorteilhaft, dass eine Arbeitsschritt ein Öffnen oder Schließen der Schalung oder des Deckels der Schalung, Entnehmen des Betontübbings, ein Reinigen der Schalung, ein Vorbereiten der Schalung zum nachfolgenden Einbringen von Beton, ein Bestücken der Schalung mit wenigsten einem Element des Betontübbings, ein Vermessen der Schalung, ein Befüllen der Schalung mit Beton oder ein Behandeln der Oberfläche des eingebrachten Betons des Betontübbings ist. Dabei ist vorteilhaft, dass es sich bei dem wenigstens einen Element um eine Dichtung, einen Schutzliner, ein Bewehrungselement, einen Sensor, insbesondere einen Temperatursensor, ein Entwässerungselement, ein Kunststoffelement und/oder ein Erektordübel handelt.

Weiterhin ist vorteilhaft, dass es sich bei dem Werkzeug um einen Drehmomentschrauber, eine Bürste, eine Walze, ein Vermessungselement, eine Düse, einen Scanner, einen Greifer, oder eine Kamera, handelt.

Nachfolgend wird die Erfindung anhand von Ausführungsbeispielen in Verbindung mit einer Zeichnung näher erläutert. Dabei zeigen:
- Figur 1: eine Draufsicht auf eine ersten Ausführungsform einer Produktionsanlage mit einer ersten Ausführungsform einer erfindungsgemäßen Härteanlage,
- Figur 2: eine räumliche Ansicht zu Figur 1,
- Figur 3: eine Seitenansicht zu Figur 1,
- Figur 4: eine weitere räumliche Ansicht zu Figur 1,
- Figur 5: eine Draufsicht auf eine zweite Ausführungsform einer erfindungsgemäßen Produktionsanlage mit einer zweiten Ausführungsform einer erfindungsgemäßen Härteanlage,
- Figur 6: eine räumliche Ansicht zu Figur 5,
- Figur 7: eine Draufsicht zu Figur 5,
- Figur 8: eine Seitenansicht zu Figur 5,
- Figur 9: eine teilgeschnittene vergrößerte Seitenansicht zu Figur 8,
- Figur 10: eine weitere Seitenansicht zu Figur 9, und
- Figur 11: eine Draufsicht zu Figur 9.

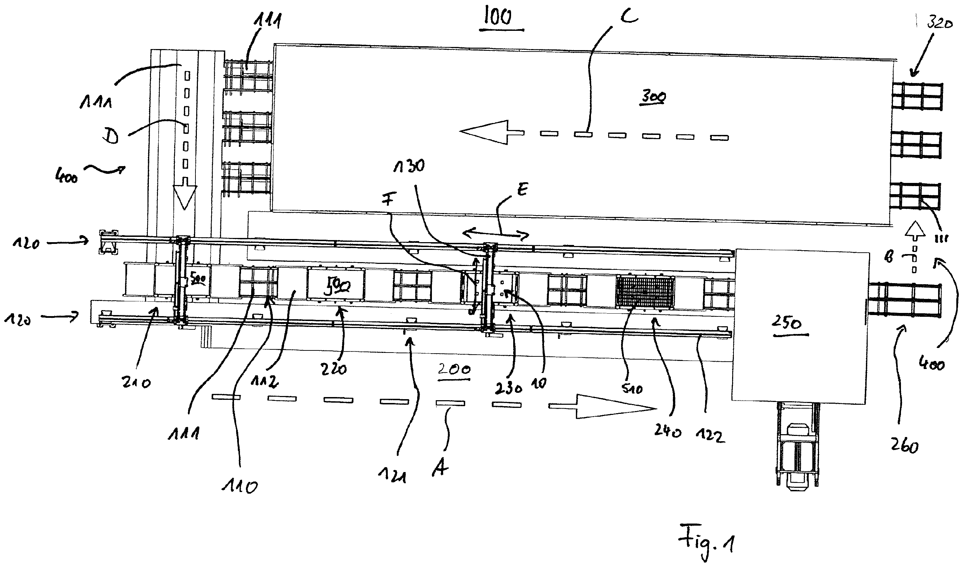

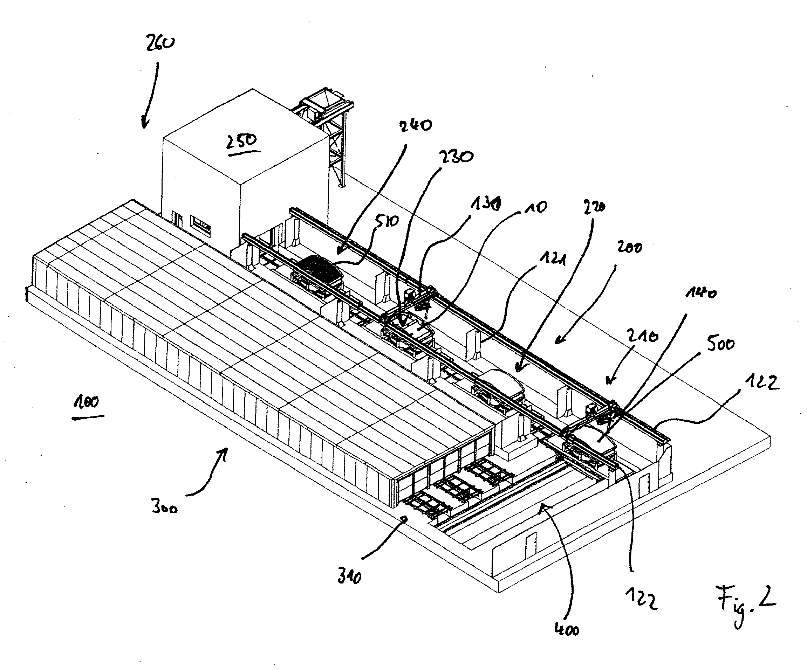

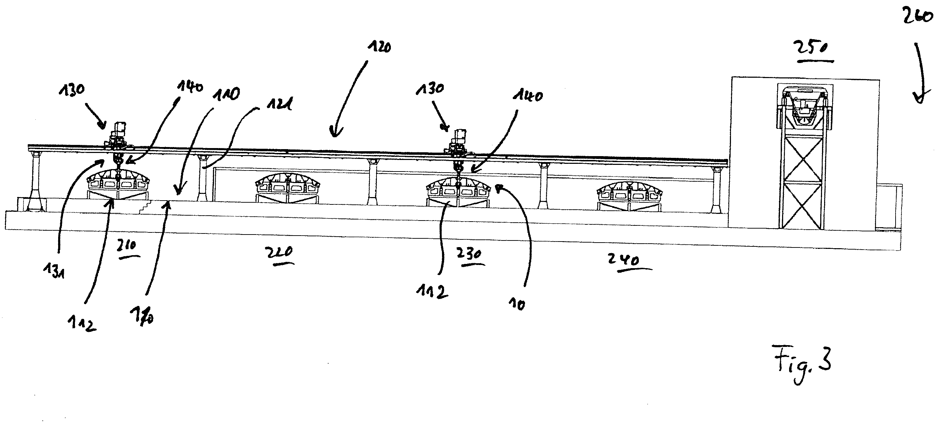

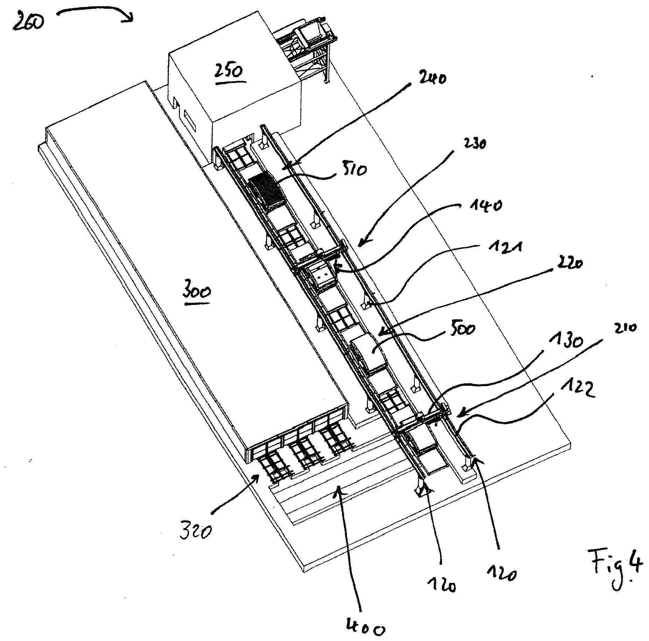

Figur 1 bis 4 zeigen eine erste Ausführungsform einer Produktionsanlage 100 mit einer ersten Ausführungsform einer erfindungsgemäßen Härteanlage 300. Die Produktionsanlage 100 ist dabei beispielsweise als Umlaufanlage ausgeführt. Die Umlaufanlage besteht dabei aus einer Produktionslinie 200 und einer Härteanlage 300 in Form eines Härtetunnel. Der Härtetunnel 300 weist dabei mindestens eine Härtelinie 320, in Figur 1 dargestellt drei Härtelinien 320, auf. Die Produktionslinie 200 und der Härtetunnel 300 bzw. dessen Härtelinien 320 sind mit einem Querförderer 400 verbunden.

Die Produktionsanlage 100 weist einen Transportweg 110 auf. Der Transportweg 110 weist eine Fahrbahn 111 auf, auf der ein Transportmittel 112 verfahrbar ist. Auf dem Transportmittel 112 ist eine Schalung 10 angeordnet. Die Transportmittel 112 bewegen sich entlang des Transportwegs 110 in Pfeilrichtung A durch die Produktionslinie 200.

Nach Durchlaufen der Produktionslinie 200 werden sie vom Querförderer 400 in Pfeilrichtung B den Härtelinien 320 des Härtetunnels 300 zugeführt. Auch der Querförderer 400 weist eine Fahrbahn 111 auf, auf der die Transportmittel 112 bewegt werden. Gleiches gilt auch für die Härtelinien 320 des Härtetunnels 300.

Nach Durchlaufen des Härtetunnels 300 in Pfeilrichtung C werden die Transportmittel 112 mittels des Querförderer 400 in Pfeilrichtung D der Produktionslinie 200 wieder zugeführt. Der Umlauf ist dann abgeschlossen.

In Pfeilrichtung A, in Figur 1 von links nach rechts gesehen, weist die Produktionslinie 200 hier beispielhaft sechs Arbeitsstationen 210 - 260 auf.

An der ersten Arbeitsstation 210 wird die Schalung 10 wie nachfolgend erläutert, geöffnet.

An der zweiten Arbeitsstation 220 wird der fertige Tübbing 500 mittels eines Hebeelements (nicht dargestellt) aus der Schalung 10 entnommen.

An der dritten Arbeitsstation 230 wird die Schalung 10 gereinigt und für die Aufnahme von Einbauelemente sowie die Betonierung vorbereitet. Hierzu wird beispielsweise ein Trennmittel (Schalungsöl) auf alle Flächen und Teile der Schalung aufgebracht, die in den Kontakt mit dem Beton des herzustellenden Tübbings 500 kommen und nicht Bestandteil des Tübbings 500 werden sollen.

An der vierten Arbeitsstation 240 wird die Schalung 10 mit den Einbauteilen bestückt, die Bestandteil des fertigen Tübbings 500 sind. Hierbei handelt es sich beispielsweise um eine Bewehrung 510, Elektrodübel (nicht dargestellt), einen Schutzliner oder dergleichen.

Nach Einbringen der Einbauteile, die alternativ auch vollständig oder teilweise an der dritten Arbeitsstation 230 nach Abschluss der Reinigung und der Vorbereitung in die Schalung 10 eingebracht werden können, wird die Schalung 10 mit den eingebrachten Komponenten kontrolliert, um zu gewährleisten, dass die Schalung 10 korrekt zusammengebaut ist und die Einbauteile des Tübbings 500 korrekt angeordnet sind.

Das Bestücken der Schalung 10 mit den Einbauteilen kann auch aufgeteilt in den Arbeitsstationen 230, 240 erfolgen.

In der fünften Arbeitsstation 250 werden, soweit nicht vorher bereits geschehen, die evtl. vorgesehenen Deckel (nicht dargestellt) der Schalung montiert, der einzubringende Beton vorbereitet nach notwendiger Mixtur und in notwendiger Menge und in die Schalung 10 eingebracht. Anschließend wird der eingebrachte Beton in bekannter Weise verdichtet. Das Einbringen und Verdichten kann abwechselnd erfolgen, bis die notwendige Betonmenge eingebracht wurde.

An der sechsten Arbeitsstation 260 wird die Betonoberfläche 520 des Tübbings behandelt, beispielsweise geglättet. Vor dem Glätten werden evtl. Deckel entfernt.

Die Produktionslinie 200 wird dann nach der sechsten Arbeitsstation 260 in diesem Beispiel verlassen, in dem das Transportmittel 112 mit der Schalung 10 und dem darin vollständig hergestellten rohen Tübbing 500 an den Querförderer 400 übergeben wird.

Die Anzahl der Arbeitsstationen ist hier nur beispielhaft zu sehen. Es ist einem Fachmann ohne weiteres möglich, die Anzahl der Arbeitsstationen durch Zusammenfassen oder Entkoppeln von einzelnen Arbeitsschritten entsprechend den Notwendigkeiten anzupassen.

Weiterhin sieht die Produktionsanlage 100 hier beispielshaft für die ersten vier Arbeitsstationen 210, 220, 230, 240 eine Arbeitsautomatisierung vor. Hierfür ist beidseitig des Transportwegs 110 der Produktionslinie 200 ein Fahrweg 120 angeordnet, der auf Pfeilern 121 erhöht vorgesehen ist. Der Fahrweg 120 weist dabei jeweils eine Fahrspur 122 auf, die beidseitig der Produktionslinie 200 vorgesehen ist. Die beiden Fahrspuren 122 sind mit einer Traverse 130 verbunden, die auf dem Fahrweg 120 in Doppelpfeilrichtung E verfahrbar ist. An der Traverse 130 ist in Doppelpfeilrichtung F bewegbar an dessen Unterseite eine Basis 131 angeordnet. Das Bewegen erfolgt hier beispielhaft mit einem Antrieb 132.

Auf der Basis 131 ist ein Roboter 140 angeordnet. Der Roboter 140 weist Arme 141, Schwenkgelenke 142 und/oder Drehgelenke 143 sowie Antriebe 144 auf. Weiterhin ist am der Basis 131 gegenüberliegenden Ende des Roboters 140 ein Werkzeug 150 angeordnet. Das Werkzeug 150 ist dabei bevorzugt wechselbar ausgeführt, sodass je nach auszuführendem Arbeitsschritt unterschiedliche Werkzeuge 150 verwendet werden können.

Bedingt durch die Verfahrbarkeit der Traverse 130 in Doppelpfeilrichtung E entlang des Fahrwerks 120 sowie der Verfahrbarkeit der Basis 131 in Doppelpfeilrichtung F entlang der Traverse 130 ist es möglich, die Basis 131 des Roboters 140 in X, Y Richtung über der Produktionslinie 200 anzuordnen. Weiterhin ist es durch den Aufbau des Roboters 140 möglich, das Werkzeug 150 an einem beliebigen Punkt (X, Y, Z) im Raum der Produktionslinie 200 anzuordnen, sodass mit dem jeweiligen Werkzeug 150 Arbeiten an oder in der Schalung 10 vom Roboter 140 mit dessen Werkzeug 150 ausführbar sind.

In Abhängigkeit der Arbeitsstationen 210 - 260, deren Anordnung und Ausführung und der gleichzeitig in Ihnen auszuführenden Arbeitsschritte ist es möglich, eine oder auch mehrere, hier dargestellte zwei, Traversen 130 und Roboter 140 in der Produktionslinie 200 vorzusehen.

Die Werkzeuge 150 können dabei in einer Werkzeugbox (nicht dargestellt) entweder direkt an der Traverse 130 oder an der jeweiligen Arbeitsstation 210 - 260 vorgehalten werden, sodass der Roboter 150 der beispielsweise ein wechselbaren Werkzeuganschlusssystem aufweist (nicht dargestellt), sich mit einem Werkzeug verbinden kann, dieses aus der jeweiligen Box entfernen kann, den Arbeitsschritt ausführen kann, dass Werkzeug 150 dann nach Beendigung des Arbeitsschrittes wieder in die Box einbringen kann, und sich von diesen lösen kann.

Anschließend wird das dabei angewendete Verfahren anhand des gezeigten Ausführungsbeispiels beispielhaft näher erläutert.

An ersten Arbeitsstation 210 wird die Schalung 10 mit dem Transportmittel 112 vom Querförderer 400 in die Produktionslinie 200 eingeführt. In der Schalung 10 ist zu diesem Zeitpunkt der vorgehärtete Tübbing 500. Die Schalung 10 ist geschlossen die Seitenwände 14 und/oder die Stirnwände 15 befinden sich miteinander verschraubt in Verbindung. Zusätzlich können zu diesem Zeitpunkt die Deckelelemente (nicht dargestellt) noch in geschlossener Stellung vorgesehen sein.

Die Schalung 10 wird an der ersten Arbeitsstation 210 positionsgenau angeordnet. Gleichzeitig wird bevorzugt die Schalung und/oder der Tübbing gescannt und erfasst. Hierfür werden beispielsweise Beschriftungen oder RFID Chips mit den geeigneten Werkzeugen ausgewertet.

Die ermittelten Daten werden in ein Datenverarbeitungssystem eingegeben.

Gleichzeitig wird basierend auf diesen Daten beispielsweise von einer speicherprogrammierbaren Steuerung der notwendige Arbeitsschritt ausgewählt und die entsprechenden Steuerbefehle an den Roboter 140 zur Auswahl des entsprechend dafür benötigten Werkzeugs und zur Durchführung des Arbeitsschritts übermittelt.

An den ersten Arbeitsstation 210 wäre dieses hier beispielsweise, sofern erforderlich, dass Abschrauben der Deckel bzw. dessen Öffnen durch Lösen von Schraubenverbindungen oder Klemmverbindungen, das Entfernen der Betoneinbauteile 26, insbesondere durch Herausschrauben, das Lösen der Eckverbindungen zwischen den Stirnwänden 15 und den Seitenwänden 14, beispielsweise durch Lösen der Schraubverbindung 18, in dem die Schraube 19 mittels des Werkzeugs 150, hier dann ein Drehmomentschrauber, herausgeschraubt wird, oder das Lösen einer Klemmverbindung, Öffnen der Stirnwände 15 und/oder der Seitenwände 14, beispielsweise durch Verschwenken um die Schwenkverbindung 13, beispielsweise mit einem Antrieb wie einer Zentralspindel oder Hydraulikzylindern.

Nach Abschluss des Arbeitsschritts kann ein Scanvorgang durchgeführt werden, ob der Arbeitsschritt adäquat durchgeführt und abgeschlossen wurde, indem beispielsweise Abstände der Seitenwände 14 und oder der Stirnwände 15 zueinander vermessen werden.

Die entsprechenden hierbei ermittelten Daten werden beispielsweise wieder an das Datenverarbeitungssystem übermittelt, das dann, wenn entsprechende Parameter eingehalten sind, nach einer Prüfung derselben eine Freigabe zum Weitertransport zur nächsten Arbeitsstation erteilt.

Im abgeschlossenen Zustand ist beispielsweise nach der Arbeitsstation 210 die Schalung geöffnet.

Bereits an der ersten Arbeitsstation 210 könnte gegebenenfalls, eingegliedert in das Steuerungssystem und auch durch dieses angesteuert, die Entnahme des Tübbing 500 aus der Schalung 10 erfolgen. Hierfür könnte ein Kran (nicht dargestellt) mit einer entsprechenden Hebeeinheit (nicht dargestellt) vorgesehen sein, um den Tübbing 500 aus der Schalung 10 zu entnehmen.

Alternativ, wie hier vorgesehen, erfolgt dieser Schritt an der zweiten Arbeitsstation 220. Nach der positionsgenauen Übergabe, die zwischen allen Arbeitsstationen beispielsweise auch über das Datensystem in Verbindung mit der speicherprogrammierbaren Steuerung vorgenommen wird, befindet sich die Schalung 10 positionsgenau an der zweiten Arbeitsstation 220. Auch hier erfolgt wiederum entsprechend eine Erkennung und Erfassung der Schalung und/oder des Tübbings 500. Wie bereits zuvor beschrieben wird hier jetzt beispielhaft der vorgehärtete Tübbing 500 aus der Schalung 10 entsprechend entnommen, um die weiteren Schritte wie beispielsweise dem Verbringen des vorgehärteten Tübbings 500 in ein Aushärtungslager einzuleiten.

Anschließend kann wiederum eine entsprechende Überprüfung erfolgen. Auch diese Daten werden wiederum an das Datensystem übergeben. Nach Prüfung und Freigabe wird die Schalung 10, die hier immer noch als eine geöffnete Schalung vorliegt, dann zur dritten Arbeitsstation 230 transportiert. Die Schalung 10 ist zu diesem Zeitpunkt leer, geöffnet und ungereinigt.

Auch an der dritten Arbeitsstation 230 wird die Schalung 10 positionsgenau eingebracht. Zusätzlich kann die Schalung 10 hier entsprechend wiederum erkannt werden. Gegebenenfalls kann zu diesem Zeitpunkt auch noch eine Zustandsermittlung der Schalung 10 durchgeführt werden, insbesondere hinsichtlich der Positionen und Aufklappwinkel der einzelnen Wände 14, 15.

Basierend auf diesen Daten übermittelt die speicherprogrammierbare Steuerung die entsprechenden Informationen und Arbeitsanweisungen an den Roboter 140.

Die Traverse 130 und/oder die Basis 131 des Roboters 140 werden an die jeweils notwendigen Anfahrpunkte verfahren. Weiterhin wird der Roboter 140 mit dem entsprechenden Werkzeug 150 bestückt, beispielsweise, indem der Roboter 140 sich mit dem entsprechenden Werkzeug 140 an einem Aufbewahrungsort verbindet und diese entnimmt.

Anschließend wird der entsprechende Arbeitsschritt durchgeführt, wobei es zu einer Überlagerung der Bewegungen der Traverse, der Basis sowie der Bestandteile des Roboters 140 kommen kann, um den entsprechenden Arbeitsschritt durchzuführen. Sofern nicht anders erforderlich können auch vorgenannte Bewegungen zur Optimierung dabei weggelassen werden. An der dritten Arbeitsstation 230 wird jetzt entsprechend eine Reinigung der geöffneten Schalung 10 und eine Vorbereitung der später Beton berührenden Oberflächen der Schalung 10 wie beispielsweise der Boden 16, die Innenflächen der Seitenwände 14 und Stirnwände 15 sowie der Betoneinbauteile 26 durch Aufbringen von einem Trennmittel, wie beispielsweise Schalungsöl, durchgeführt.

Dafür wird als Werkzeug beispielsweise eine Hochdruckdüse zum Ausspritzen oder Ausblasen der Schalungsteile und/oder einer Bürste zur Reinigung ausgewählt. Die Reihenfolge ist dabei gemäß den Erfordernissen auszuwählen.

Zusätzlich kann beispielsweise auch ein Ausblasen der Formteile mit Druckluft über eine Düse erfolgen.

Gleiches gilt auch für einen eventuell vorhandenen Deckel und insbesondere auch für Ausnehmungen, in die später Einbauteile wie Dichtungen, Erektordübel oder andere Kunststoffteile eingesetzt werden.

Nach dem Abschluss der Reinigung kann dann wiederum ein Scanvorgang durchgeführt werden, um die Qualität der Reinigung entsprechend zu überprüfen.

Hierfür wird beispielsweise ein optisches Werkzeug ausgewählt, was beispielsweise anhand von Reflexionen oder dergleichen den Reinigungsgrad ermittelt. Die entsprechenden Daten werden wiederum an das Datenverarbeitungssystem und die Steuerung übergeben.

Im Anschluss daran erfolgt dann wiederum mit einem entsprechend geeigneten Werkzeug wie beispielsweise einer Düse das Einbringen des Trennungsmittels in die Schalung, ggf. gefolgt von einer erneuten Überprüfung.

Alternativ kann auch zuerst bevor das Trennungsmittel eingebracht wird, die Schalung geschlossen werden. Hierfür werden dann entsprechend in der vorliegenden Ausführungsform die Stirnwände 15 und/oder die Seitenwände 14 beispielsweise über einen Antrieb, hier beispielsweise eine Zentralspindel, die vom Drehmomentschrauber angetrieben wird, in eine Verschlussposition gebracht. Anschließend werden die Schraubverbindungen 18 zusammengeschraubt, indem beispielsweise eine entsprechende Nuss 152 auf den Kopf 27 der Schraube 19 aufgesetzt wird und diese dann gegen das Federelement 23 in das Gewindeelement 20 eingeschraubt wird.

Nach Abschluss der Schraubvorgänge kann dann wiederum eine Überprüfung mittels Scaneinheit des Hauptzustands durchgeführt werden. Alternativ ist es auch möglich, den Reinigungs- und Vorbereitungsschritt und den Schritt zum Schließen der Schalung 10 hinsichtlich der Arbeitsstationen aufzuteilen.

Nach Abschluss der Arbeitsschritte an der dritten Arbeitsstation 230 ist die Schalung 10 gereinigt, das entsprechende Trennmittel aufgebracht, und die Schalung ist entsprechend geschlossen.

Zusätzlich können auch die Betoneinbauteile 26 in den Innenraum 17 der Schalung 10 hinein bewegt worden sein, beispielsweise indem diese vom Drehmomentschrauber als Werkzeug 150 durch Schrauben bewegt wurden.

Ggf. nach Abschluss eines entsprechenden Scanschrittes kann dann die Freigabe zum Bewegen der Schalung 10 zur vierten Arbeitsstation 240 erfolgen.

Die Überprüfung eines oder aller Arbeitsschritte kann alternativ auch losgelöst vom System durch einen Mitarbeiter erfolgen, der dann entsprechend die Freigaben manuell an das System übergibt.

Anschließend wird die Schalung 10 positionsgenau in der vierten Arbeitsstation 240 angeordnet. Die Schalung wird sofern notwendig entsprechend wiederum erkannt. Weiterhin werden die Einbauteile, die der entsprechend jetzt zu fertigende Tübbing 500 enthalten soll, entsprechend in die vorbereitete Schalung eingebracht. Hierfür werden wiederum gezielte Werkzeuge 150 ausgewählt. Das Bewegen des Roboters 140 sowie des Werkzeugs 150 erfolgt wiederum durch eine Kombination der möglichen Schritte Verfahren der Traverse 130, der Basis 131 gegenüber der Traverse 130 und dem entsprechenden gesteuerten Antreiben der Arme 141, Schwenk- und Drehgelenke 142,143 sowie der damit in Verbindung stehenden Antriebe 144.

In die Schalung 10 eingebracht werden können beispielsweise ein vorgefertigtes Schutzelement, Randdichtungen, Kunststoffeinbauteile, Erektordübel, Entwässerungselemente, Temperatursensoren, Feuchtigkeitssensoren oder dergleichen.

Als Werkzeug 150 hierfür werden entsprechende Greifer mit dem Roboter 140 verbunden. Der Roboter 140 platziert die entsprechenden Einbauelemente gemäß den im Datensystem hinterlegten Positionen, wozu er von der speicherprogrammierten Steuerung die entsprechenden Steuerungsdaten erhält. Weiterhin wird entweder manuell oder ebenfalls gesteuert beispielsweise mittels eines Krans (nicht dargestellt) ein Bewährungskorb 151 oder andere Bewährungselemente in die Schalung 10 eingebracht.

Das Einbringen kann dann wiederum von einem entsprechenden Überprüfungselement überprüft werden.

Zusätzlich können Deckelelemente angebracht und/oder geschlossen werden. Weiterhin kann ggf. erneut eine Überprüfung der korrekten Anordnung der Seitenwände 14 und/oder Stirnwände 15 erfolgen.

Nach Überprüfung und Freigabe wird dann die vollständig vorbereitete Schalung 10 zur fünften Arbeitsstation 250 zum Einbringen des Beton sin die vorbereitete Schalung 10 überführt.

In der fünften Arbeitsstation 250 wird die Schalung 10 wiederum positionsgenau angeordnet und wie zuvor beschrieben ggf. erfasst. Weiterhin wird basierend auf dem zu erstellenden Tübbing 500 die Betonzusammensetzung und die Betonmenge entsprechend vorbereitet. Dieses erfolgt bevorzugt wiederum basierend auf den Daten des Datenverarbeitungssystems in Kombination mit der speicherprogrammierbaren Steuerung.

Weiterhin ist es sinnvoll, um beispielsweise die entsprechende Härtungszeit ermitteln zu können, zusätzlich beim Betonieren weitere Parameter zu erfassen, wie beispielsweise Temperatur und Feuchtigkeit. Diese Daten können dann zusammen mit den Daten hinsichtlich Betonzusammensetzung und Menge zur Steuerung der Umgebungsparameter wie Temperatur und Feuchtigkeit in der Härtekammer 310 und ggf. auch entlang der Härtelinie 320 verwendet werden.

Weiterhin kann in der fünften Arbeitsstation 250 entsprechend die Verdichtung des Betons in der Schalung 10 in bekannter Art und Weise erfolgen.

Je nach Anforderung kann auch hier bereits eine Behandlung der Oberfläche des geschüttelten Tübbings 500 sowie ein Entfernen der Deckel erfolgen.

Zusätzlich kann auch hier wiederum ein entsprechender Überprüfungsschritt durchgeführt werden. Erfolgt dieser wie zuvor beschrieben positiv, kann dann die gefüllte Schalung 10 an die sechste Arbeitsstation 260 übergeben werden.

Nach entsprechender positionsgenauer Anordnung und ggf. Scannen bzw. Erfassen der Schalung und/oder des jetzt gefüllten Tübbings erfolgt die Glättung der Betonoberfläche des Tübbings 500 entweder in den nicht von Deckeln geschlossenen Bereich oder über die gesamte Fläche, wenn beispielsweise die Deckel geöffnet oder entfernt werden. Auch dieses kann beispielsweise automatisiert erfolgen. Auch hierfür kann beispielsweise ein zuvor beschriebenes verfahrbares Robotersystem mit entsprechenden Werkzeugen verwendet werden.

Nach Überprüfung und Freigabe wird die Schalung 10 mit dem darin befindlichen rohen Tübbing 500 beispielsweise über den Querförderer 400 einer Härtelinie 320 des Härtetunnels 300 zugeführt. Nach entsprechend gesteuerten Durchlaufens des Härtetunnels 300 wird die Schalung 10 mit dem dann vorgehärteten Tübbing 500 beispielsweise mit dem weiteren Querförderer 400 der ersten Arbeitsstation 210 der Produktionslinie 200 zugeführt.

Dem Fachmann ist klar, dass in Abhängigkeit der jeweiligen Projektanforderungen Arbeitsstationen und/Arbeitsschritte weggelassen, hinzugefügt, anders angeordnet oder verteilt werden können. Auch ist es möglich, dass die zuvor genannten Arbeitsschritte lediglich an einer Arbeitsstation bzw. an mehr oder weniger Arbeitsstationen als beschrieben durchgeführt werden.

Die Steuerung des zuvor beschriebenen Verfahrens bzw. der Produktionsanlage 100 erfolgt dabei wie beschrieben mittels einer speicherprogrammierbaren Steuerung in der die entsprechenden Arbeitsschritte und die dazugehörigen Positionen des Roboters 140 sowie der jeweiligen Werkzeuge 150 hinterlegt bzw. verarbeitet werden. Kombiniert ist dieses mit einem entsprechenden Datenverarbeitungssystem/Datenspeichersystem in dem die entsprechenden Parameter hinterlegt sind bzw. die entsprechenden Daten der Sensoren bzw. Erfassungswerkzeuge hinzugefügt werden und der Steuerung entsprechend für die Durchführung der einzelnen Arbeitsschritte bereitgestellt werden.

Mit der zuvor beschriebenen Produktionsanlage 100 sowie dem beschriebenen Verfahren in Verbindung mit der beschriebenen Steuerung ist es möglich, die Arbeitssicherheit zu erhöhen. Weiterhin lässt sich Material einsparen, wobei ein präzises und gleichbleibendes Verwenden der Materialien erfolgt. Weiterhin ist es möglich, ein hohes und konstantes Qualitätsniveau zu erreichen und einzuhalten. Weiterhin kann für jeden einzelnen Tübbing der Herstellungsprozess dokumentiert werden mit den entsprechenden Überprüfungsdaten. In Verbindung mit der Kennzeichnung der einzelnen Tübbings ist es des Weiteren möglich, somit für jedes einzelne Element im fertiggestellten Tunnel den entsprechenden Herstellungsprozess zu dokumentieren. Weiterhin ist es auf einfache Weise möglich das Verfahren und die Produktionsanlage 100 durch Veränderungen in der Steuerung sowie durch Änderungen an Werkzeugen kontinuierlich zu verbessern bzw. eine Wiederverwendung der einzelnen Komponenten nach Abschluss des Tunnelbauprojekts zu ermöglichen.

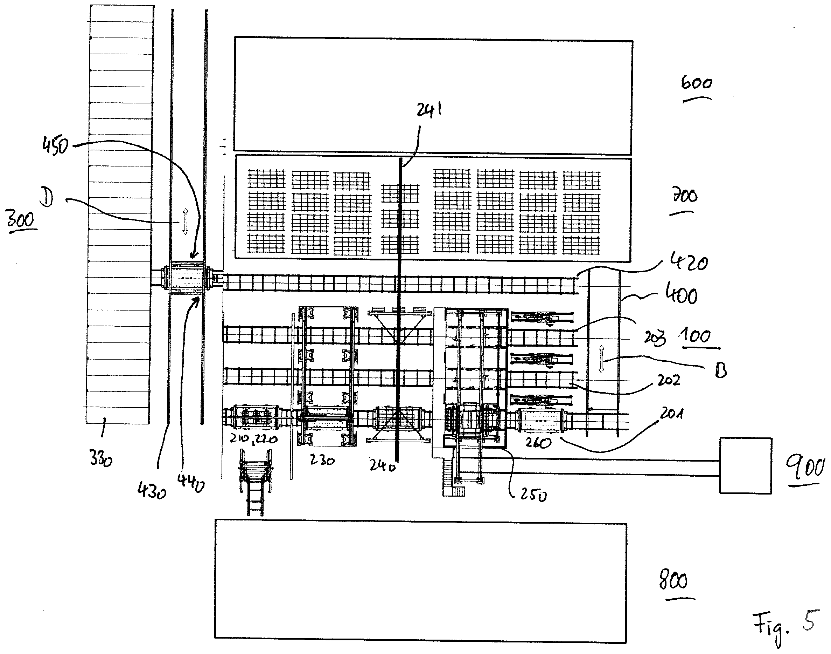

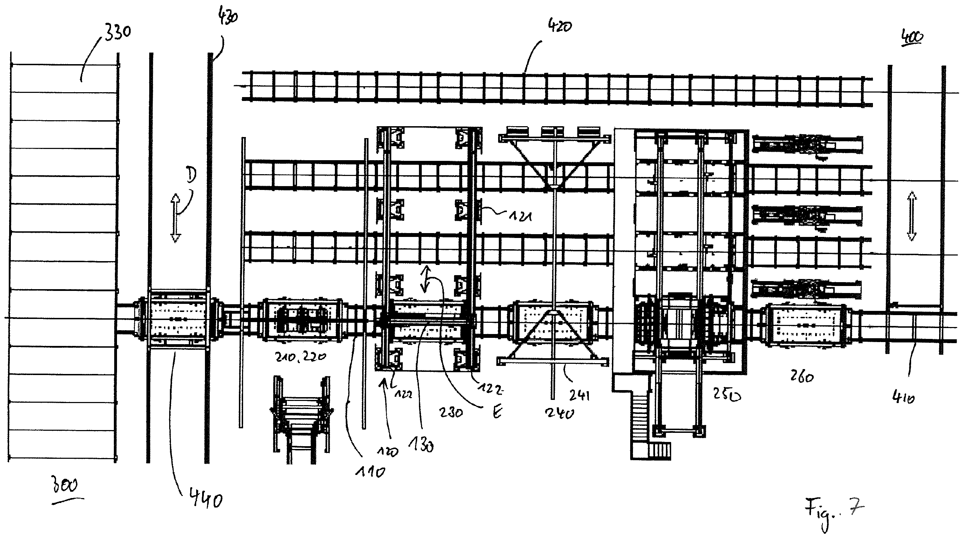

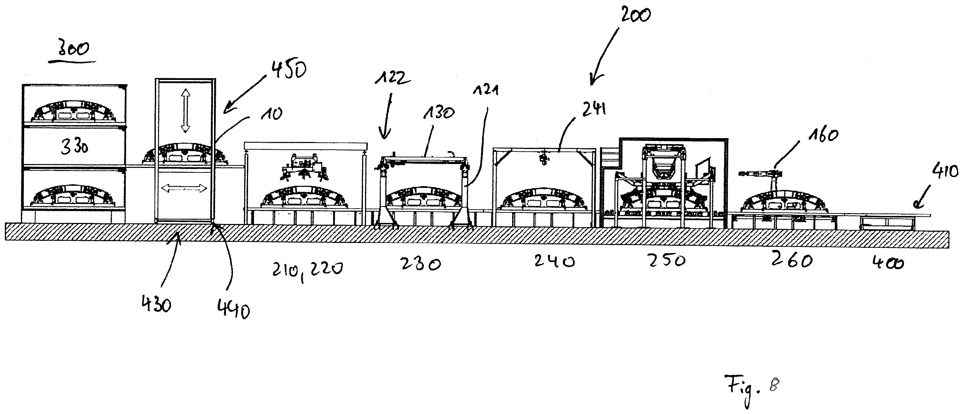

Die Figuren 5-11 zeigen eine zweite Ausführungsform einer erfindungsgemäßen Produktionsanlage 100. Die Produktionsanlage 100 ist dabei beispielsweise als Umlaufanlage ausgeführt. Der Produktionsanlage vorgeschaltet ist eine Anlage zur Herstellung von Bewährungskörben 600, in der automatisiert beispielsweise mittels Schweißrobotern die Bewehrungen für die Tübbinge 500 hergestellt werden. Die fertig hergestellten Bewehrungskörbe werden in eine Bewehrungskorblager 700 zwischengelagert, um sicherstellen zu können, dass die Tübbingproduktion der Produktionsanlage 100 von Liefer- und Qualitätsproblemen externer Bewehrungskorbproduktionen entkoppelt wird. An die Produktionsanlage 100 angeschlossen ist ein Lager für die fertigen Betontübbinge, in dem diese ihre abschließende Härte zu dem Einbau in den Tunnel durch zeitliche Lagerung erreichen. Die Produktionsanlage 100 weist weiterhin eine Härteanlage 300 auf.

Die Produktionsanlage 100 weist dabei mehrere Produktionslinien 201, 202, 203 auf. In diesem Ausführungsbeispiel sind die einzelnen Produktionslinien 201, 202, 203 jeweils mit einem Transportweg 110 versehen. Der Transportweg 110 weist eine Fahrbahn 111, hier in Form von Schienen, auf, auf der die Schalungen 10 beispielsweise mit Rädern 29 verfahrbar sind.

Die Produktionslinien 201, 202, 203 weisen jeweils Arbeitsstationen 210, 220, 230, 240, 250, 260 wie zuvor beschrieben auf, wobei die Arbeitsstationen 210 (Öffnung der Schalung) und 220 (Entnahme des Tübbings 500) hier zusammengefasst sind. Weiterhin parallel angeordnet sind die Arbeitsstationen 230, in der eine Reinigung und Vorbereitung der Schalung 10 zur Aufnahme der neuen Bewehrung und der Einbauteile vorgesehen ist. Ebenfalls parallel angeordnet sind die Arbeitsstationen 240, bei der das Einbringen der Bewehrung aus dem Bewährungslager 700 erfolgt. Daran angeschlossen ist die Betonierarbeitsstation 250 des Tübingens 500 in der Schalung 10. Der Beton wird von einer Betonanlage 900 zugeführt.

Im Anschluss daran ist eine Glättungsstation 260 zur Glättung der Oberfläche des Tübingens 500 vorgesehen. Die Stationen 260 sind ebenfalls parallel vorgesehen. Im Anschluss an die Produktionslinien 201, 202, 203 ist ein Querförderer 400 vorgesehen, auf dem ein Fahrelement 410 verfahrbar in Doppelpfeilrichtung B ist. Auf das Fahrelement 410 kann die Schalung 10 auffahren, damit sie einem Rückförderer 420 zugeführt werden kann. Dieser verläuft parallel zu den Produktionslinien 201, 202, 203.

Die Produktionsanlage weist somit innerhalb der Produktionslinien 201, 202, 203 15 Plätze auf, an denen sich Schalungen 10 befinden können, damit mit ihnen Arbeitsschritte vorgenommen werden. Als weitere Lagerpunkt kann eine Schalung 10 auf dem Fahrelement 410 vorgesehen sein. Weiterhin ist es möglich, dass sich auf dem Rückförderer 420 insgesamt fünf weitere Schalungen 10 befinden können, sodass insgesamt in der Produktionsanlage 20 oder 21 Schalungen 10 vorgesehen sein können, wenn das Fahrelement als Lagerplatz mitberücksichtigt wird.

Zur Entnahme einer Schalung aus dem Rückförderer 420 ist ein weiterer Querförderer 430 vorgesehen, auf dem ein Fahrelement 440 in Doppelpfeilrichtung D verfahrbar ist. Auf dem Fahrelement 440 ist eine Hubvorrichtung 450 vorgesehen, die nachfolgend erläutert wird.

Der Querförderer 430 ist vor einer Härteanlage 300 angeordnet.

Die Härteanlage 300 ist hier als ein "Hochregallager" ausgeführt. Sie weist hier bevorzugt drei Ebenen 301, 302, 303 auf, die aus übereinander und nebeneinander angeordneten Härtekammern 310 gebildet sind. Gemäß einem bevorzugten Ausführungsbeispiel sind in der Härteanlage 300 Härtekammern nebeneinander vorgesehen, sodass bei drei Ebenen 301, 302, 303 insgesamt 39 Härtekammern die Härteanlage 300 bilden. Umlaufend können somit 59 bis 60 Schalungen 10 in der zuvor beschriebenen Anlage beispielsweise eingesetzt werden.

Die Härtekammern 310 sind dabei als containerartige Module ausgeführt. Beispielsweise weisen sie einen Rahmen auf, an dem Seitenteile, ein Boden und eine Decke befestigt werden können.

Diese können in Abhängigkeit der erforderlichen Parameter der Härtung vorgesehen werden. Beispielsweise kann es vorteilhaft sein, mehrere Härtekammern 310 zu eine größeren Härtekammer zusammenzufassen, in den dann die gleichen Umgebungsparameter wie Temperatur und Feuchtigkeit eingestellt werden können. Allerdings kann es auch gerade vorteilhaft sein, jeweils individuelle Härtekammern vorzusehen.

Bevorzugt werden die Härtekammern 310 aus Standardcontainern oder Standardcontainern nachempfundene Rahmen gebildet.

Gemäß einer Lehre der Erfindung sind die Härtekammern 310 entweder jeweils einzeln oder in Clustern zusammengefasst und besonders bevorzugt mit einer Klimaregelung (zur Regelung der Temperatur und Feuchtigkeit, nicht dargestellt) versehen. Je nachdem, wie viele Container zu einem temperierten Cluster zusammengefasst werden, werden dann entsprechend die Seitenwände, Decken oder Böden der Härtekammern 310 weggelassen, um eine entsprechende Zirkulation von Wärme und Feuchtigkeit zu gewährleisten.

Die einzelnen Härtekammern 310 können jeweils mit Toren versehen werden, die zur Entnahme bzw. Hinzufügung der einzelnen mit Tübingens 500 versehenen Schalungen 10 geöffnet oder geschlossen werden. Hierbei kann es sich beispielsweise um Folientore oder andere vertikal öffnende Tore handeln. Die Tore sind nicht dargestellt.

In den Härtekammern 310 sind beispielsweise Elemente des Fahrwegs, wie beispielsweise Schienen, vorgesehen, auf denen die Schalungen 10 verfahrbar sind.

Weiterhin ist es möglich, weitere Anordnungen der Härtekammern 310 vorzusehen. Beispielsweise ist es auch möglich, die Härte kann man hintereinander vorzusehen, um daraus einen ein- oder mehrstöckigen Härtetunnel zu erzeugen.

Ein großer Vorteil der so aufgebauten modularen Härtekammern ist, dass diese als Standardelement vorgefertigt werden können, sodass diese vorproduziert zu einer zu errichtenden Produktionsanlage 100 für Tübbinge 500 angeliefert werden können, sodass die Herstellungszeit der Härteanlage 300 sich deutlich reduziert. Weiterhin sind die modularen Härtekammern wiederverwertbar, da sie nach Beendigung der Tübbingproduktion als Module entnommen, in Stand gesetzt und einer neuen Produktionsanlage zugeführt werden können.

Ein weiterer Vorteil ist dabei, dass die Härtekammern 310, wenn sie als Container ausgeführt sind, mit normalen Container-Verbindungsmitteln zum Anordnen von Containern übereinander und nebeneinander wie beispielsweise Twistlocks oder Midlocks oder dgl. verbunden werden können, sodass sich die Montagezeiten eine Härteanlage 300 erheblich reduzieren. Weiterhin sind solche Standardverbindungsteile kostengünstig verfügbar. Auch eine Abspannung dieser Container mit Zurrgeschirr ist entsprechend beispielsweise möglich.

Weiterhin ist insbesondere der Aufbau der Produktionsanlage der zweiten Ausführungsform modular vorgesehen, so dass auch die Bestandteile der einzelnen Arbeitsstationen bzw. Einzelne Arbeitsstationen als ganze Module vorgefertigt und transportiert werden können. Aus diese sind dann nach Beendigung der Tübbingproduktion als Module entfernbar, instandsetzbar und/oder umrüstbar und in einer neu zu errichtenden Produktionsanlage wiedereinsetzbar.

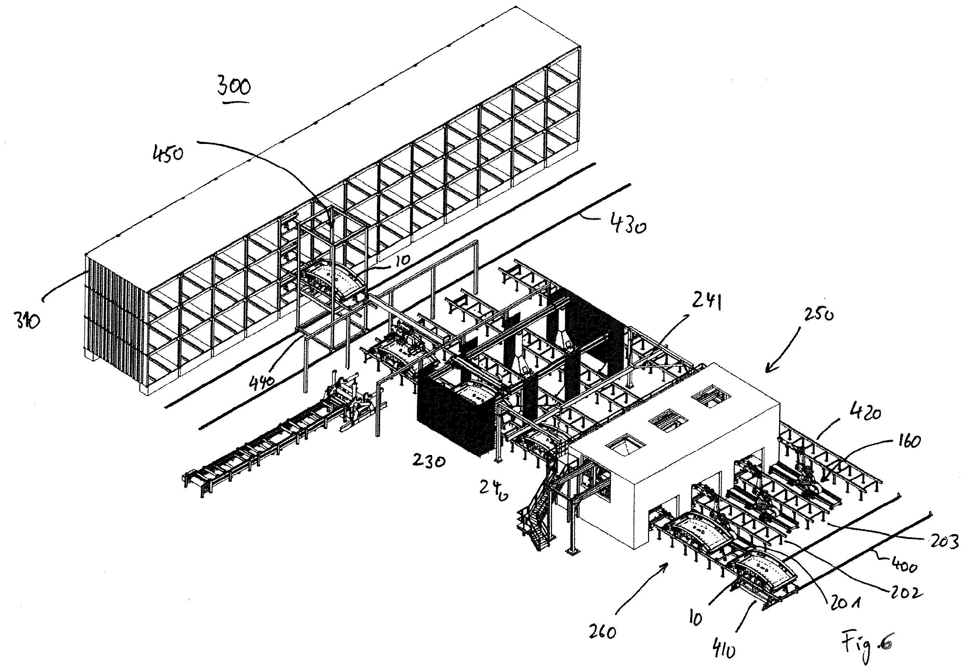

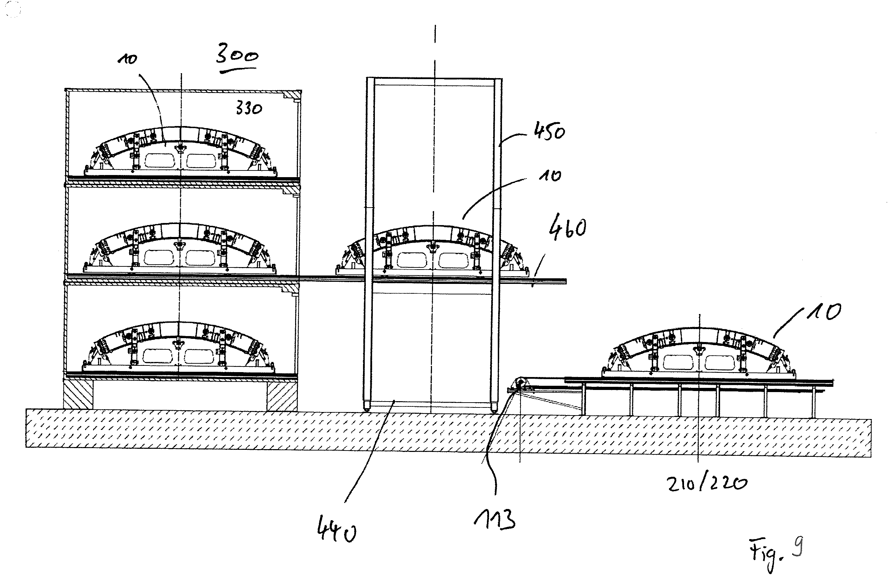

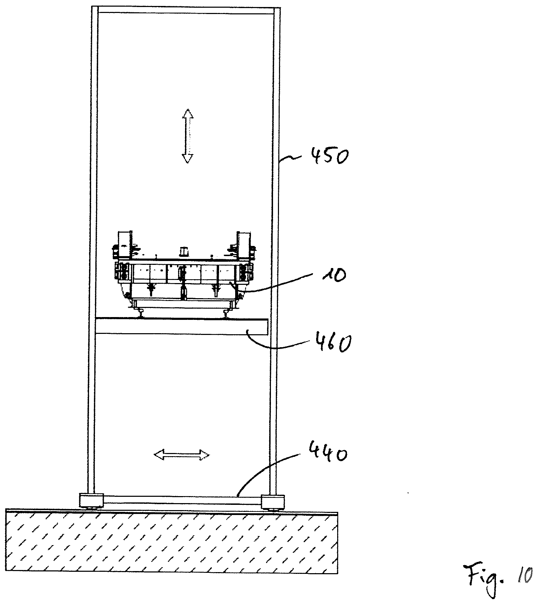

Ist das Fahrelement 400 Doppelpfeilrichtung D verfahrbar. Auf dem Fahrelement 440 ist eine Hubvorrichtung 450 angeordnet. Die Hubvorrichtung 450 weist eine Plattform 460 auf, auf die eine Schalung 10 verfahrbar ist, sodass diese von dem Rückförderer 420 herunter und in eine entsprechende Härtekammer 310 hinein bzw. hinaus und dann wiederum in eine der Produktionslinien 201, 202, 203 hinein verfahrbar ist. Dieses ist beispielsweise in den Figuren 6-10 dargestellt. Figur 9 zeigt dabei eine Seitenansicht der Hubvorrichtung 450 und Figur 10 eine Seitenansicht auf die kurze Seite der Hubvorrichtung 450. Das vertikale Bewegen der Plattform 460 erfolgt dabei mittels geeigneter Antriebsmittel, die nicht dargestellt sind. Gleiches gilt auch beispielsweise für ein Bewegen der Schalung 10 auf die Plattform 460 hinauf bzw. von dieser herunter.

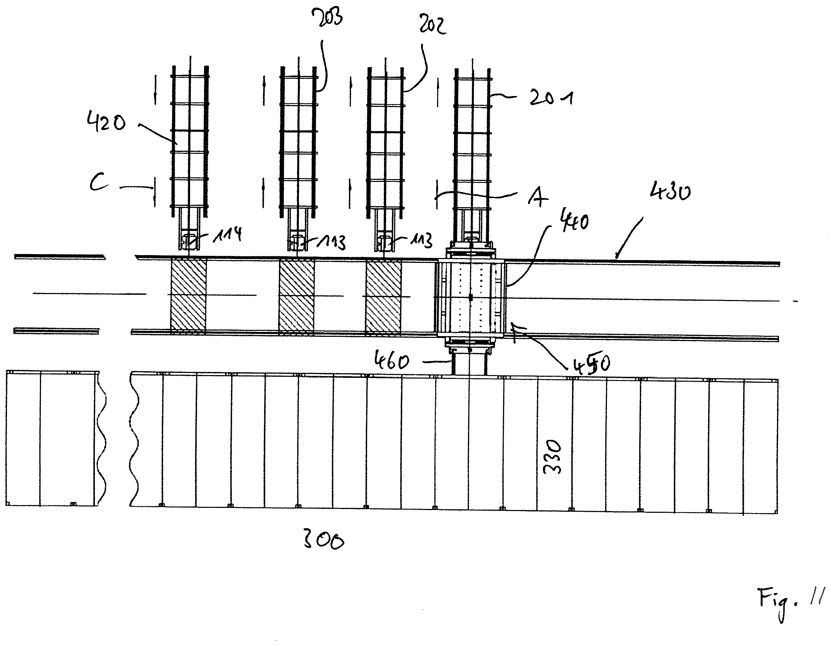

Die Fahrbahnen 111 der Transportwege 110 der Produktionslinien 201, 202, 203 sind jeweils mit einem Antrieb 113 versehen, siehe insbesondere Figuren 9 und 11. Dieser Antrieb ermöglicht beispielsweise das Verfahren der Schalungen 10 in den Produktionslinien 201, 202, 203. Auch der Rückförderer 420 ist entsprechend mit einem Antrieb 114 versehen.

Die parallel angeordneten Arbeitsstationen 230 zur Reinigung und Vorbereitung der Schalung 10 weisen quer zum Transportweg 110 der Produktionslinien 201, 202, 203 einen Fahrweg 120 auf, um eine Automatisierung dieser Arbeitsstationen 230 zu bewirken. Hierfür weist der Fahrweg zwei parallele Fahrspuren auf, die mit einer Traverse 130 verbunden sind. Die Traverse ist auf dem Fahrweg 120 in Doppelpfeilrichtung E verfahrbar. Die Fahrspuren 122 selbst sind auf Pfeilern 121 erhöht vorgesehen. Die Traverse 130 dient dabei als Fahrweg für eine Basis eines Roboter 140, wie dieser zuvor bereits beschrieben wurde. Die Funktionalität des Roboters 140 ist hier entsprechend. Gleiches gilt auch für das Wechseln der Werkzeuge.

Bevorzugt kommen hier ein Bürstenwerkzeug zur Reinigung und ein Sprühwerkzeug zum Aufbringen des Trennmittels zum Einsatz. Das Bewegen des Roboters 140, das Wechseln der Werkzeuge sowie die Anordnung der Werkzeuge sind dabei wie zuvor beschrieben vorgesehen. Unterschiedlich ist hier lediglich, dass mit dem Roboter 140 drei parallel angeordnete gleiche Arbeitsstationen bedient werden, wobei der Fahrweg 120 hier quer zur Produktionslinie 201, 202, 203 und nicht längs wie zuvor beschrieben vorgesehen ist.

An der Arbeitsstationen 240 ist ein horizontal in X- und Y-Richtung verfahrbarer Portalkran 241 vorgesehen. Der Portalkran 241 kann dabei beispielsweise so ausgeführt sein, dass er außerhalb der Produktionsanlage Bewehrungskörbe aufnehmen kann, beispielsweise im Bewehrungskorblager 700, wie dieses in Figur 5 dargestellt ist, und die Bewehrungskörbe dann in den Innenraum 17 der jeweiligen Schalung 10 einbringen kann.

Auch die Betonierstation 250 erstreckt sich quer zu den Produktionslinien 201, 202, 203. Innerhalb der Betonierstation 250 ist ebenfalls ein Fahrweg 120 vorgesehen, der oberhalb der Schalungen 10 angeordnet ist. Der Fahrweg 120 ist hier beispielsweise derart zweigeteilt, dass auf einer ersten Ebene ein automatischer Deckel zum teilweisen Verschließen der Schalung 10 bzw. zum teilweise verschließen der noch offenen Bereiche der Schalung 10 vorgesehen ist. Oberhalb davon ist ebenfalls verfahrbar eine Schüttvorrichtung (nicht dargestellt) für den Beton vorgesehen, die entlang des Fahrwegs 120 verfahrbar ist. Das betonieren des Tübbings erfolgt derart, dass im Wechsel Beton in die Schalung 10 eingebracht wird und die Schalung dann für einen Zeitraum ruht oder vibriert wird. Je nach Produktionsschritt sind dann der Deckel und die Schütteinheit entsprechend oberhalb der drei in der Betonierstation möglichen Schalungen angeordnet.

## Patentansprüche

1. Härteanlage zum Härten eines in eine Schalung (10) zum Herstellen eines Betontübbings (500) eines Tunnelausbausystems eingefüllten Betons mit wenigstens einer Härtekammer (310), in der wenigstens eine Schalung (10) anordbar ist, mit wenigstens einer Anlage zur Bereitstellung wenigstens eines definierten Umgebungsparameters, insbesondere Temperatur und/oder Luftfeuchtigkeit, wobei die Härtekammer (310) wenigstens eine verschließbare Öffnung aufweist, durch die die wenigstens eine Schalung (10) in den Raum einbringbar und/oder entnehmbar ist, **dadurch gekennzeichnet, dass** die wenigstens eine Härtekammer (310) aus wenigstens einem containerartigen Modul aufgebaut ist.

2. Härteanlage nach Anspruch 1, **dadurch gekennzeichnet, dass** das wenigstens eine containerartige Modul wenigstens einen Rahmen aufweist,

3. Härteanlage nach Anspruch 2, **dadurch gekennzeichnet, dass** der wenigstens eine Rahmen bevorzugt mit einem oder mehreren Seitenelementen, mit einem oder mehreren Bodenelementen und/oder einem oder mehreren Deckenelementen versehen ist.

4. Härteanlage nach einem der Ansprüche 1 bis 3, **dadurch gekennzeichnet, dass** das wenigstens eine containerartige Modul oder dessen wenigstens eine Rahmen als ein Standart-Iso-Container ausgeführt ist.

5. Härteanlage nach einem der Ansprüche 1 bis 4, **dadurch gekennzeichnet, dass** die wenigstens eine Härtekammer aus mehrere hintereinander, nebeneinander und/oder übereinander angeordneten Modulen aufgebaut ist.

6. Härteanlage nach einem der Ansprüche 1 bis 5, **dadurch gekennzeichnet, dass** wenigstens eine Härtekammer aus einem containerartigen Modul besteht.

7. Härteanlage nach einem der Ansprüche 1 bis 6, **dadurch gekennzeichnet, dass** wenigstens zwei Härtekammern (310) vorgesehen sind, die hintereinander, nebeneinander und/oder übereinander vorgesehen sind.

8. Härteanlage nach einem der Ansprüche 1 bis 7, **dadurch gekennzeichnet, dass** die wenigstens eine Härtekammer (310) mit einer Klimaregelung zur Regelung wenigstens eines Umgebungsparameters wie Temperatur und/oder Feuchtigkeit versehen ist.
die wenigstens eine Härtekammer (310) wenigstens einen Messsensor zur Überwachung des wenigstens einen Umgebungsparameters aufweist.

9. Härteanlage nach einem der Ansprüche 1 bis 8, **dadurch gekennzeichnet, dass** eine Steuerung zum Einstellen der Umgebungsparameter vorgesehen ist.

10. Härteanlage nach Anspruch 9, **dadurch gekennzeichnet, dass** der wenigstens einen Umgebungsparameter in wenigstens einer Härtekammern (310) durch die Steuerung in Abhängigkeit der Größe des Betonelements, des Typs des Betonelements und/oder der Betonzusammensetzung einstellt.

11. Härteanlage nach einem der Ansprüche 5 bis 10, **dadurch gekennzeichnet, dass** die Module über Verbindungsmittel miteinander verbunden sind.

12. Härteanlage nach einem der Ansprüche 1 bis 11, **dadurch gekennzeichnet, dass** die Härtekammern 310 entweder jeweils einzeln oder in Clustern zusammengefasst angeordnet sind.

13. Härteanlage nach einem der Ansprüche 1 bis 12, **dadurch gekennzeichnet, dass** die wenigstens eine Härtekammer (310) mit einer Klimaregelung zur Regelung der Temperatur und/oder Feuchtigkeit versehen ist.
